# EUROPEAN PATENT APPLICATION

(11) **EP 2 469 682 A1**
(43) Date of publication of application: **27.06.2012**
(21) Application number: 10810055.3
(22) Date of filing: 19.08.2010
(51) Int. Cl.: H02J 7/00, H01M 10/44

(54) **QUICK CHARGING DEVICE**

(30) Priority: 21.08.2009 JP 2009191507; 28.06.2010 JP 2010145894
(71) Applicant: JFE Engineering Corporation, Chiyoda-ku Tokyo 100-0004 (JP)
(72) Inventor: ISHIKAWA, Hirofumi, Yokohama-shi Kanagawa 230-8611 (JP); HARAYAMA, Masami, Yokohama-shi Kanagawa 230-8611 (JP); IMAIZUMI, Masato, Yokohama-shi Kanagawa 230-8611 (JP)
(74) Representative: HOFFMANN EITLE
(86) International application number: PCT/JP2010/064424
(87) International publication number: WO 2011/021718

(57) **Abstract**

The present invention provides a quick charging device that can perform quick charging even with a conventional meter-rate lighting power supply or a low-voltage power-service power supply, and, if a battery to be charged (an in-vehicle, battery of an electric vehicle, for example) is empty, can repeatedly perform charging at a charging rate of 30 to 50% (up to a maximum of approximately 60%). To charge an in-vehicle battery 11 of an electric vehicle (EV) 10, the quick charging device 20 includes: a converter 21 that has a rectifying function to convert an alternating current supplied from a 100-V or 200-V AC power supply into a direct current, and a boosting function; a battery (a high-power-density battery) 22A that has a high power density and an instantaneous force; and a battery (a high-energy-density battery) 22B that has a high energy density and a large energy capacity.

## Description

### TECHNICAL FIELD

The present invention relates to a quick charging device to be used for charging electric vehicles (EVs) and the like.

### BACKGROUND ART

The spread of electric vehicles is a critical issue in solving global warming and reducing carbon dioxide.

To rapidly spread electric vehicles, however, the infrastructure for chargers needs to be improved. When charging is performed by a currently-available charger using a conventional meter-rate lighting power supply or a low-voltage power-service power supply outside the home, approximately 14 hours is required with a 100-V power supply, and approximately 7 hours is required with a 200-V power supply. Therefore, the use of an electric vehicle is not suited for a long drive.

In view of this, quick charging devices (quick chargers) have been developed. However, a quick charging device requires a 50-kW large power source capacity even for a currently-available small-sized electric vehicle. The required power source capacity exceeds the power receiving capacity of a conventional meter-rate lighting power supply or a low-voltage power-service power supply, and therefore, switching to a large industrial power receiving capacity is necessary. As a result, there is a large increase in the basic service fee, and it becomes necessary to reinforce the transformer installation for a larger power receiving capacity.

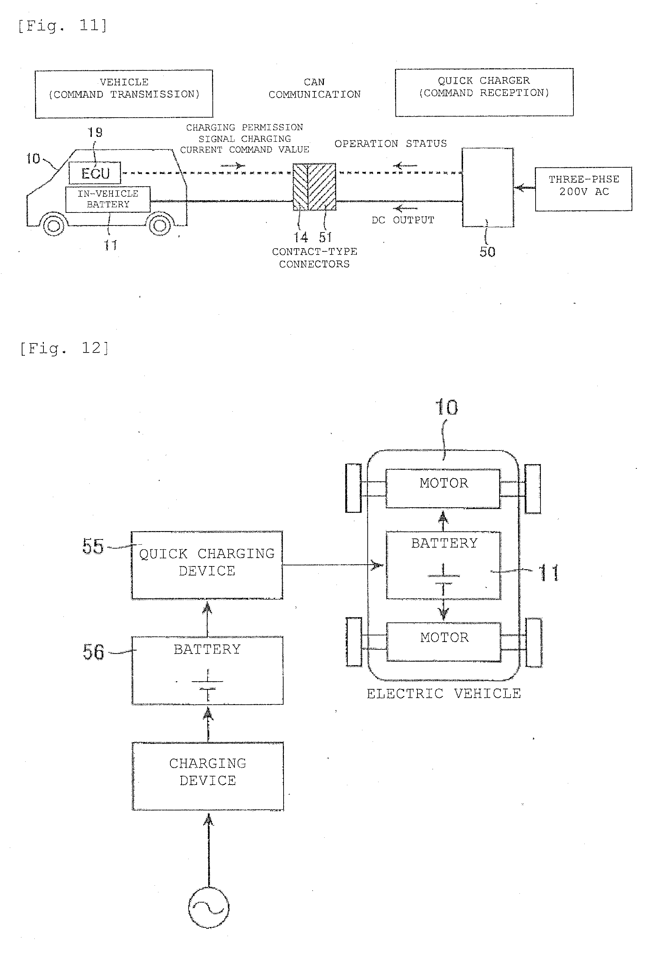

FIG. 11 illustrates an example of a conventional charging system (a quick charging system) for electric vehicles. A quick charger 50 using a 100-V AC power supply or a 200-V AC power supply, and contact-type connectors (a connector 14 on the electric vehicle side and a connector 51 for quick charging) are connected to each other. An in-vehicle battery 11 of an electric vehicle 10 is then charged. The charge control at this point is performed through CAN communications between the ECU (electronic control unit) 19 of the electric vehicle 10 and the quick charger 50 . It should be noted that the in-vehicle battery 11 can also be charged by an in-vehicle charger (not shown) using a 100-V AC power supply for household use.

In the above described quick charging system, the use of the quick charger 50 enables approximately 80 to 90% charging of the entire in-vehicle battery 11 in approximately 30 minutes. To realize this, an extremely large power source capacity is necessary for the quick charger 50 to receive an alternating current from a 100-V or 200-V power supply, convert the alternating current into a direct current (100 A or higher at approximately 400 V) in the quick charger 50, and charge the electric vehicle 10 with the direct current.

The costs for quick charging facilities including reinforcements of transformer installation are too high for gas stations, convenience stores, medium- and small-seized supermarkets, local post offices, parking facilities, and the like, and therefore, it is difficult for them to adopt the quick charging facilities, though they wish to do so. Therefore, if there are devices that can perform quick charging with a conventional meter-rate lighting or low-voltage power-service power receiving capacity without transformers, electric vehicles would spread dramatically.

In a quick charging device disclosed in Patent Document 1, a battery 56 is provided in a stage before a quick charging device 55, to shorten the charging time for the in-vehicle battery 11 of the electric vehicle 10, as shown in FIG. 12. This case has the advantage that there is no need to use receiving transformers.

However, if electric vehicles spread rapidly, and electric vehicle charging is frequency performed particularly in urban areas, the power stored in batteries beforehand would be exhausted in a very short time, and thereafter, only very slow charging would be performed.

Therefore, at stations that electric vehicles visit around the clock, there is a need for large power source capacities with an initial power receiving capacity of 50 kW or higher. However, even when such an electric vehicle era arrives, the sites that require large-capacity quick chargers with the above described large capacities are limited to specific parts of urban areas, and a large number of quick chargers installed in the suburbs do not need to have power receiving capacities of 50 kW or higher. In the suburbs, a power receiving capacity with which a few vehicles can be quickly charged will suffice. Therefore, there will still be the needs for the quick charging system disclosed in Patent Document 1.

### Citation List

### Patent Document

Patent Document 1: Japanese Patent Application Laid-Open No. 6-253461

### DISCLOSURE OF THE INVENTION

### PROBLEMS TO BE SOLVED BY THE INVENTION

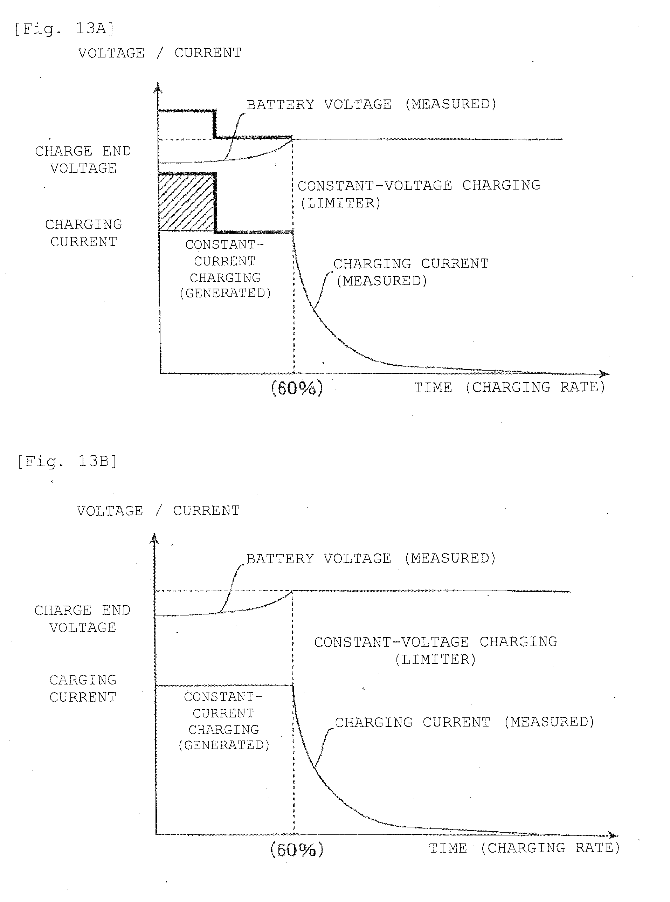

A lithium-ion battery is normally used as the in-vehicle battery 11 of the electric vehicle 10. As shown in FIG. 13(a), it is known that a lithium-ion battery in an empty state can receive a large power supply both in voltage and current as the initial charging voltage and charging current as indicated by bold lines in the graph. At a filling rate of approximately 60% or lower, the battery is not damaged, and the service life of the battery is not greatly shortened, while a large capacity can be received.

However, currently-available quick charging devices are limited to approximately 50 kW due to the restrictions on the meter-rate lighting or low-voltage power-service power supplies. Therefore, a high current cannot be supplied in the initial stage of charging, and the charging pattern shown in FIG. 13 (b) cannot be avoided.

In Patent Document 1, if quicker charging is to be repeatedly performed, the battery 56 needs to be a very expensive battery with a large capacity and a high power density.

Further, there are no systems for charging electric vehicles that have run out of in-vehicle batteries and got stuck on the road, in a short time that is almost the same as the time required for conventional refueling.

The present invention has been made in view of the above circumstances, and an obj ect thereof is to provide an inexpensive quick charging device that can perform quick charging with a conventional meter-rate lighting power supply or a low-voltage power-service power supply, and, if the battery to be charged (an in-vehicle battery of an electric vehicle, for example) is empty or almost empty, can repeatedly perform charging at a charging rate of 30 to 50% (up to a maximum of approximately 60%) in a short time (a few minutes).

### MEANS TO SOLVE THE PROBLEMS

To solve the above problems, the present invention has the following features.
[1] A quick charging device for charging a battery to be charged characteristically includes a battery with a high power density (a high-power-density battery) and a battery with a high energy density (a high-energy-density battery).
[2] The quick charging device of [1] is **characterized in that** the battery to be charged is quickly charged to a certain electrical capacitance in a short time solely by the high-power-density battery.
[3] The quick charging device of [1] or [2] is **characterized in that**, when the high-power-density battery discharges, the high-power-density battery is charged by the high-energy-density battery.
[4] The quick charging device of [1] is **characterized in that** charging and discharging are repeated by switching between the high-power-density battery and the high-energy-density battery.
[5] The quick charging device of any of [1] through [4] characteristically further includes a boosting converter.
[6] The quick charging device of any of [1] through [5] is **characterized in that** the battery to be charged is an in-vehicle battery of an electric vehicle.
[7] A mobile charging system includes the quick charging device of any of it 1. through [6], the quick charging device being mounted on a vehicle.

### EFFECTS OF THE INVENTION

In the quick charging device of the present invention, quick charging can be performed even with a conventional meter-rate lighting power supply or a low-voltage power-service power supply. Also, if the battery to be charged (an in-vehicle battery of an electric vehicle, for example) is empty, charging can be repeatedly performed at a charging rate of 30 to 50% (up to a maximum of approximately 60%), which is necessary and sufficient for the purpose of use (driving of the electric vehicle, for example), in a short time (a few minutes) that is approximately a tenth of a conventional charging time.

With this arrangement, a quick charging device can be installed without an increase in the number of transformers, and an increase in basic monthly service fee due to an increase in electricity use can be prevented.

Even if an electric vehicle runs out of the in-vehicle battery and gets stuck on the road, the in-vehicle battery can be charged on the road in a short time by the mobile charging system having the quick charging device of the present invention mounted on a vehicle. Accordingly, the traffic disturbing time can be minimized.

### BRIEF DESCRIPTION OF THE DRAWINGS

FIG. 1 is a diagram showing the fundamental structure (the concept) of an embodiment of the present invention.
FIG. 2 is a diagram showing a specific structure according to an embodiment of the present invention.
FIG. 3 is a diagram for explaining an operating condition in an embodiment of the present invention.
FIG. 4 is a diagram for explaining an operating condition in an embodiment of the present invention.
FIG. 5 is a diagram for explaining an operating condition in an embodiment of the present invention.
FIG. 6 is a diagram for explaining an operating condition in an embodiment of the present invention.
FIG. 7 is a diagram for explaining an operating condition in an embodiment of the present invention.
FIG. 8 is a diagram for explaining an operating condition in an embodiment of the present invention.
FIG. 9 is a diagram for explaining an operating condition in an embodiment of the present invention.
FIG. 10 is a diagram for explaining a mobile charging system to which an embodiment of the present invention is applied.
FIG . 11 is a diagram for explaining a conventional charging system.
FIG. 12 is a diagram for explaining a quick charging system disclosed in Patent Document 1.
FIG. 13(a) is a graph showing a charging pattern of a lithium-ion battery.
FIG. 13(b) is a graph showing a currently-available charging pattern of a lithium-ion battery with a meter-rate lighting or low-voltage power supply service.

### DESCRIPTION OF THE EMBODIMENTS

The following is a description of an embodiment of the present invention, with reference to the drawings. In this description, an in-vehicle battery of an electric vehicle is described as an example of a battery to be charged.

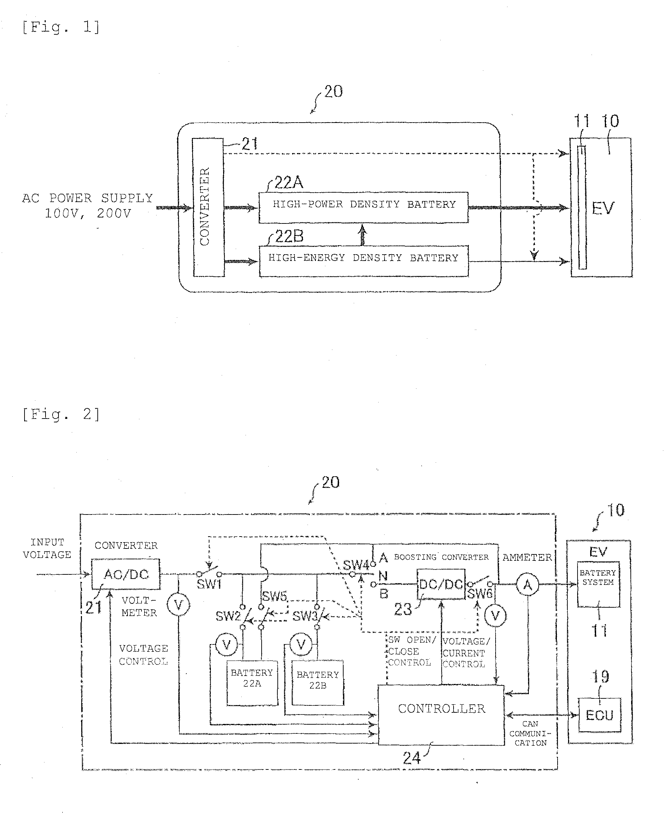

FIG. 1 shows the fundamental structure (the concept) of an embodiment of the present invention.

As shown in FIG. 1, to charge an in-vehicle battery 11 of an electric vehicle (EV) 10, a quick charging device 20 according to this embodiment includes: a converter 21 that converts an alternating current supplied from a 100-V or 200-V AC power supply into a direct current; a battery (a high-power-density battery) 22A that has a high power density and an instantaneous force; and a battery (a high-energy--density battery) 22B that has a high energy density and a large energy capacity.

Here, an electrical double layer capacitor, a lithium-ion capacitor, a high-power lithium-ion battery, or the like is used as the high-power-density battery 22A.

A sodium-sulfur battery, a lithium-ion battery, a nickel-hydrogen battery, or the like is used as the high-energy-density battery 22B.

In the above described structure, the high-power-density battery 22A and the high-energy-density battery 22B are charged in advance, and the in-vehicle battery 11 of the electric vehicle (EV) 10 is quickly charged to a certain electrical capacitance (at a charging rate of 30 to 60%) in a short time (a few minutes) at a high voltage and a high current tolerated by the in-vehicle battery 11, through electrical discharge solely from the high-power-density battery 22A. After the high-power-density battery 22A discharges, the high-power-density battery 22A is charged by the high-energy-density battery 22B.

It should be noted that the in-vehicle battery 11 can also be charged by using electrical discharge from the high-energy-density battery 228 or the direct current converted by the converter 21, as needed.

That is, in this embodiment, quick charging can be performed even with a conventional meter-rate lighting power supply or a low-voltage power-service power supply. Also, if the in-vehicle battery of the electric vehicle is empty, charging can be repeatedly performed at a charging rate of 30 to 50% (up to a maximum of approximately 60%), which is necessary and sufficient for driving, in a short time (a few minute) that is approximately a tenth of a conventional charging time.

With this arrangement, a quick charging device can be installed without an increase in the number of transformers, and an increase in basic monthly service fee due to an increase in electricity use can be prevented.

In the following, the structure according to this embodiment is described in detail.

FIG. 2 illustrates a specific structure according to an embodiment of the present invention.

As shown in FIG. 2, to charge the in-vehicle battery 11 of the electric vehicle (EV) 10, the quick charging device 20 according to this embodiment includes: the converter 21 that has a rectifying function to convert an alternating current supplied from a 100-V or 200-V AC power supply into a direct current, and a boosting function; the battery (the high-power-density battery) 22A that has a high power density and an instantaneous force; and the battery (the high-energy-density battery) 22B that has a high energy density and a large energy capacity, which have been described with reference to FIG. 1. Further, the quick charging device 20 includes: a boosting converter 23 for performing boosting, as needed, so that charging can be performed at the voltage and current required by the electric vehicle 10; switches (SWI, SW2, SW3, SW4, SW5, and SW6) for changing the flow of current in the quick charging device 20; a voltmeter and an ammeter for measuring the voltage and current in the quick charging device 20; and a controller 24 for controlling operations of the quick charging device 20.

Based on measurement information from the voltmeter and the ammeter, and CAN communications with the ECU 19 of the electric vehicle 10, the controller 24 performs open/close control (ON/OFF control) on each of the switches SW1 through SW6, voltage control using the converter 21, and voltage/current control using the boosting converter 23.

Next, operating conditions (operating modes) of the quick charging device 20 having the above structure are described.

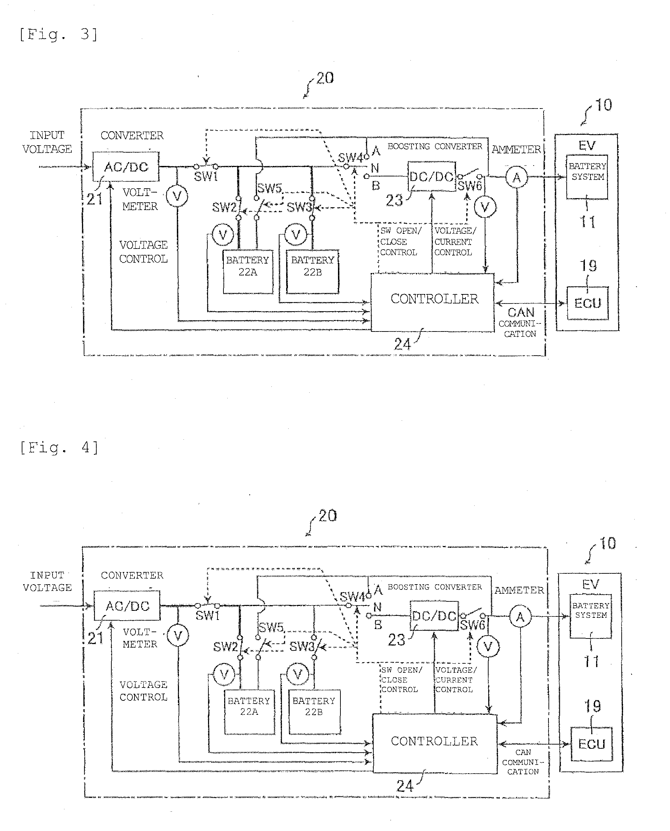

FIG. 3 illustrates a situation where the high-power-density battery 22A and the high-energy-density battery 22B are being charged, as indicated by bold lines in FIG. 3, in the nighttime during which the electric vehicle 10 does not come for charging, and in a time period during which the electric vehicle 10 is not charged even in the daytime.

Particularly, in a case where there is a contract for a lower nighttime electricity price, it is economically beneficial to charge both the batteries (the high-power-density battery 22A and the high-energy-density battery 22B) in the nighttime.

Since the quick charging device 20 is designed to be installed at a gas station or a shop or the like, the electrical capacitance to which both the batteries (the high-power--density battery 22A and the high-energy-density battery 22B) are to be charged is set so that the total of the electrical capacitance to which the two batteries are to be charged and the electrical capacitance to be used at the gas station or the like does not exceed the electrical capacitance that can be received at the gas station or the like.

In this manner, the basic electricity price can be restrained to a low one, without an excess of the electrical capacitance set by the contract between the gas station or shop and the electric power company.

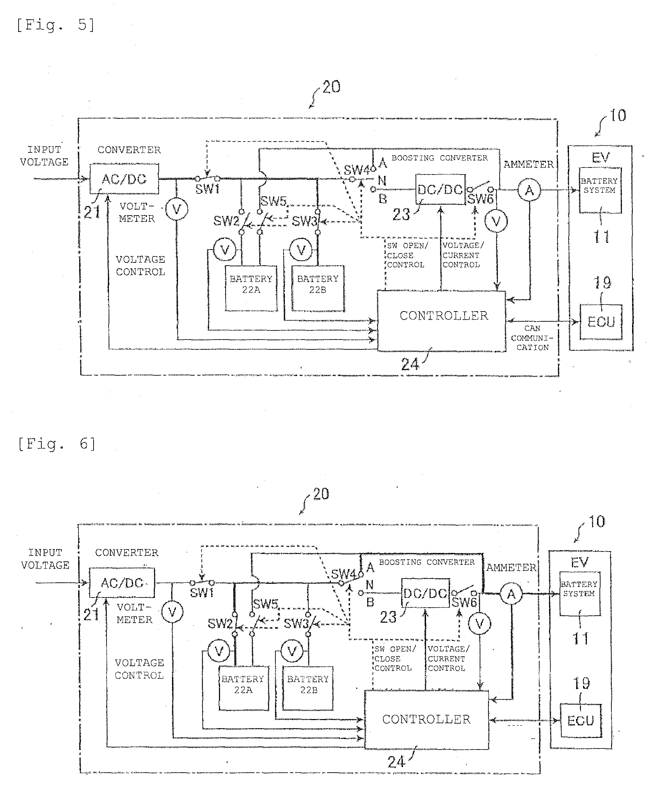

However, in a case where there is a certain probability that the electric vehicle 10 comes during a time period in the daytime, an operating mode to charge only the high-power-density battery 22A as indicated by a bold line in FIG. 4 can be selected. In this case, after the high-power-density battery 22A is fully charged, the operating mode is automatically switched to an operating mode to charge only the high-energy-density battery 22B as indicated by a bold line in FIG. 5.

In the cases illustrated in FIGS. 4 and 5, the electrical capacitance set by the contract between the gas station or shop or the like and the electric power company is not exceeded, and the basic electricity price can be restrained to a low one as in the case described with reference to FIG. 3.

When the in-vehicle battery 11 of the electric vehicle 10 is charged, the in-vehicle battery 11 is charged at once by using the output of the high-power-density battery 22A as indicated by a bold line in FIG. 6, and charging is performed by a certain amount in a short time, so as to allow a travel distance of approximately 80 km.

In this case, the in-vehicle battery 11 of the electric vehicle is charged at once by the high-power-density battery 22A that has a high power density and high charge/discharge performance, without the use of the boosting converter 23. Therefore, there is no loss in the boosting converter 23, and the charging efficiency is greatly improved.

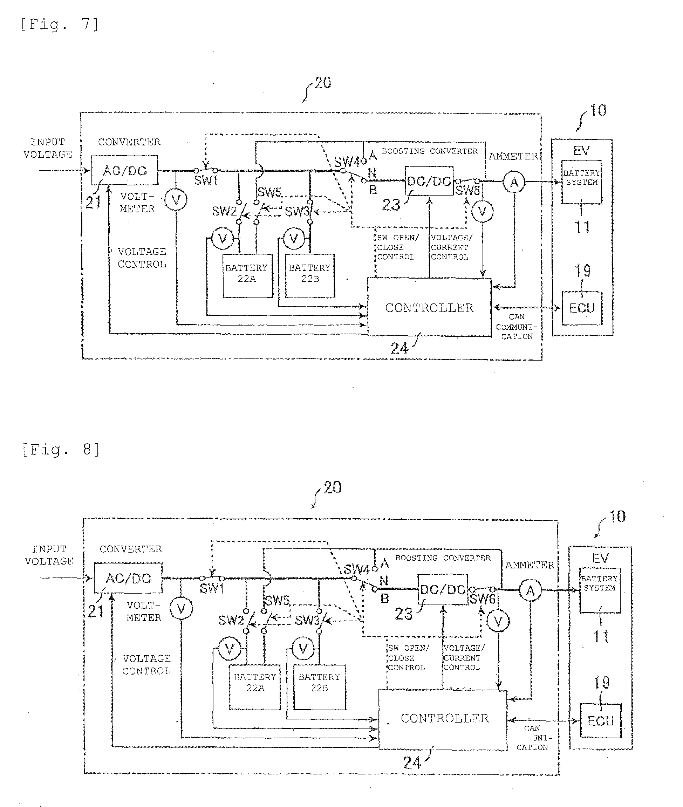

If there is time left to charge the electric vehicle 10 even after the electrical capacitance of the high-power-density battery 22A is discharged to the electric vehicle 10, the electrical capacitance still remaining in the high-energy-density battery 22B and the power supply having an input power supply added thereto as needed are boosted by the boosting converter 23 as indicated by a bold line in FIG. 7, so as to charge the in-vehicle battery 11 of the electric vehicle 10. In this manner, the charging rate of the in-vehicle battery 11 of the electric vehicle 10 can be made higher.

However, if the electrical capacitance (the energy capacity) of the high-energy-density battery 22B is low, the high-energy-density battery 22B is charged by using the power supply to the conventional meter-rate lighting or the low-voltage power service, as shown in FIG. 5. If the electric vehicle 10 comes for charging in this situation, however, the electric vehicle 10 is charged by using the power supply to the conventional meter-rate lighting or the low-voltage power service as indicated by bold lines in FIG. 8. In this case, the charging time cannot be shortened.

Therefore, it is critical to fully charge both the high-power-density battery 22A and the high-energy-density battery 22B in the nighttime as shown in FIG. 3, and, in the other time periods, fully charge the high-power-density battery 22A and the high-energy-density battery 22B independently of each other by using time periods during which the electric vehicle 10 is not being charged, as shown in FIGS. 4 and 5.

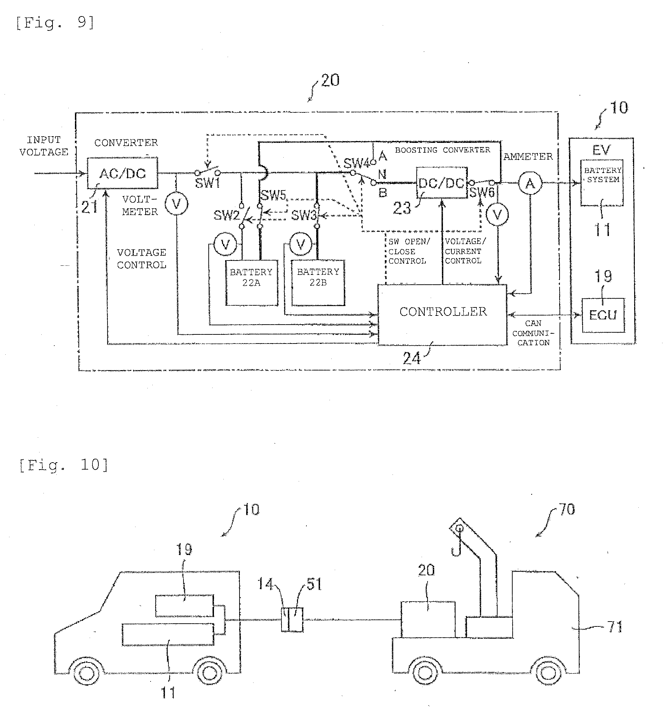

In a case where the next electric vehicle 10 comes after an electric vehicle 10 is fully charged and the high-power-density battery 22A becomes empty, the high-power-density battery 22A is charged by the high-energy-density battery 22B, as indicated by bold lines in FIG. 9, by using the time before the next electric vehicle comes for charging.

At that point, the charging rate in the high-energy-density battery 22B becomes lower, and accordingly, the voltage becomes lower. Therefore, voltage boosting is performed by the boosting converter 23, and charging is performed through constant voltage or constant current control. In this manner, the high-power-density battery 22A can be charged. It should be noted that the charge control performed by the boosting converter 23 at this point is optimum charge control in accordance with the characteristics of the high-power-density battery 22A.

Even if the electric vehicle 10 frequently comes for charging, the electric vehicle 10 can be repeatedly charged by repeating the above routine until the electrical capacitance of the high-energy-density battery 22B is exhausted. In that case, the electric vehicle 10 that frequently comes at short intervals can be charged in a short time. However, the in-vehicle battery 11 can be charged at a charging rate of 40 to 50%, so that a travel distance of 80 km or longer can be realized, and the usability of the electric vehicle 10 can be dramatically increased.

Quick chargers that are currently available on the market receive instructions, through CAN communications with the electric vehicle 10, about voltages and currents to be supplied from the quick chargers in accordance with the charging rate of the in-vehicle battery 11. The quick chargers perform charging under the conditions, so that the batteries are not damaged by an excess current. Since most of the currently-available quick chargers have a power source capacity of 50 kW, control is performed not to exceed that capacity. Therefore, at 400 V, the output to the electric vehicle 10 does not exceed 125 A.

The in-vehicle battery 11 of the electric vehicle 10 is normally not damaged even when receiving a large electrical capacitance (voltage and current) at a low charging rate. Accordingly, a high voltage and a high current can be supplied from the high-power-density battery 22A to the in-vehicle battery 11 in the initial stage of charging, and the charging speed can be increased if it is only for a short period of time.

However, in a case where the filling rate of the in-vehicle battery 11 becomes a certain value or higher (60% or higher, for example), the charging current value is controlled to become lower, so as not to damage the in-vehicle battery 11.

Therefore, in a case where the filling rate of the in-vehicle battery 11 at the start of charging is equal to or higher than a certain value (40% or higher, for example), a signal indicating such a situation is received from the electric vehicle 10, and control is performed so that the high-power-density battery 22A does not perform quick charging.

In that case, charging is not performed with the high-power-density battery 22A as shown in FIG. 6, but charging is performed with the high-energy-density battery 22B and a power supply equivalent to the receiving power supply from the conventional meter-rate lighting as shown in FIG. 7.

In a case where the converter 21 has only the rectifying function to convert an alternating current into a direct current and does not have the boosting function, charging is performed in the circuit illustrated in FIGS. 3, 4, and 5 when the high-power-density battery 22A and the high-energy-density battery 22B are charged by the meter-rate lighting power supply or a low-voltage power supply. However, voltages do not become higher in both the high-power-density battery 22A and the high-energy-density battery 22B, voltage boosting may be performed on the power supply to the high-energy-density battery 22B by the boosting converter 23 in the circuit illustrated in FIG. 9, and after that, the battery 11 of the electric vehicle 10 may be charged with the power accumulated in the high-power-density battery 22A.

FIG. 10 illustrates a mobile charging system to which an embodiment of the present invention is applied.

As shown in FIG. 10, the mobile charging system 70 is a system in which the quick charging device 20 according to an embodiment of the present invention is mounted on a vehicle 71. Receiving a call from the electric vehicle 10 that has run out of the in-vehicle battery 11 and got stuck on the road, the vehicle 71 having the quick charging device 20 mounted thereon goes to the scene. A connector 51 for quick charging is connected to a connector 14 on the electric vehicle side on the road, and the electric vehicle 10 (the in-vehicle battery 11) is charged in a short time.

Standing by already in a charged state, the mobile charging system 70 can perform enough charging in short time, so that the electric vehicle 10 that has run out of the in-vehicle battery 11 and got stuck or the road can go to the nearest quick charging facility for emergency or go back home.

In the above described embodiments, the battery to be charged is an in-vehicle battery of an electric vehicle. However, the present invention is not limited to that, and can also be applied to charging other batteries (such as batteries for automatic guided electric vehicles and electrical facilities that are used to use engines).

### DESCRIPTION OF REFERENCE SIGNS

- 10: electric vehicle (EV)
- 11: in-vehicle battery
- 14: connector on the electric vehicle side
- 19: ECU (electronic control unit)
- 20: quick charging device
- 21: converter
- 22A: high-power-density battery
- 22B: high-energy-density battery
- 23: boosting converter
- 24: controller
- 50: quick charger
- 51: connector for quick charging
- 55: quick charging device
- 56: battery
- 70: mobile charging system
- 71: vehicle

## Claims

1. A quick charging device for charging a battery to be charged, the quick charging device comprising a battery with a high power density (a high-power-density battery) and a battery with a high energy density (a high-energy-density battery).

2. The quick charging device according to claim 1, wherein the battery to be charged is quickly charged to a certain electrical capacitance in a short time solely by the high-power-density battery.

3. The quick charging device according to claim 1 or 2, wherein, when the high-power-density battery discharges, the high-power-density battery is charged by the high-energy-density battery.

4. The quick charging device according to claim 1, wherein charging and discharging are repeated by switching between the high-power-density battery and the high-energy-density battery.

5. The quick charging device according to any of claims 1 through 4, further comprising a boosting converter.

6. The quick charging device according to any of claims 1 through 5, wherein the battery to be charged is an in-vehicle battery of an electric vehicle.

7. A mobile charging system comprising the quick charging device according to any of claims 1 through 6, the quick charging device being mounted on a vehicle.
